# EUROPEAN PATENT SPECIFICATION

(11) **EP 2 896 824 B1**
(45) Date of publication and mention of the grant of the patent: **01.06.2016**
(21) Application number: 14151794.6
(22) Date of filing: 20.01.2014
(51) Int. Cl.: F03D 7/04, F03D 7/02

(54) **Brake system for a wind turbine generator**
Bremssystem für einen Windturbinengenerator
Système de freinage pour générateur d'éolienne

(43) Date of publication of application: 22.07.2015
(73) Proprietor: Siemens Aktiengesellschaft, 80333 München (DE)
(72) Inventor: Jensen, Daniel Kai, 8700 Horsens (DK); Nielsen, Rune, 7430 Ikast (DK); Veng, Jens Anton Agerskov, 7430 Ikast (DK)

(56) References cited:
- EP-A1- 2 590 301
- DE-A1-102009 048 735
- US-A1- 2010 079 019
- US-A1- 2010 329 867
- US-A1- 2011 121 579

## Description

### Field of the invention

The present invention relates to wind turbine generator, for example a direct drive generator (DD-generator), with a brake system and to a wind turbine. The invention further relates to a method for assembling a wind turbine generator.

### Background of the invention

In principle there are two main types of wind turbines in view of the direct drive configuration of a wind turbine. The first type of a wind turbine is the more classical type of a wind turbine comprising a gearbox arranged between a main shaft and a generator of the wind turbine. The second type of a wind turbine is a gearless type, where the gearbox and the conventional generator are substituted by a multipolar generator, a so called direct drive or directly driven generator. Such a direct drive generator can be made as a synchronous generator with winded rotor or with permanent magnets attached to the rotor, or it can be designed as an alternative type of a generator. One of the challenges with the direct drive generator is the mechanical brake system. The brake system needs to be located at the slowing rotating axis as no gear box is used. The brake system needs to withstand a large braking moment and large brake discs and callipers are necessary.

An example for a typical brake system consists of three individual mounted brake consoles, as disclosed in EP 2333326 A1 or US2011/121579. A difficulty with this solution is that the brake consoles are hard to mount and have a limited structural strength. The rotor lock in the previous design works by engaging the brake disc radially. This design has met its structural limit and is difficult to upgrade without having influence on braking area and brake integrity. The system used up to now takes long time and additional manpower for mounting. Moreover, to mount the system the mounting personnel has to be in situation which is exhausting.

### Description of the invention

It is therefore an objective of the present invention to provide an advantageous wind turbine generator, an advantageous wind turbine and an advantageous method for assembling a wind turbine generator.

This objective is solved by a wind turbine generator as claimed in claim 1, by a wind turbine as claimed in claim 11 and by a method for assembling a wind turbine generator, as claimed in claim 12. The depending claims define further developments of the present invention.

The inventive wind turbine generator comprises a stator assembly, a rotor assembly and a rotation axis. The rotor assembly comprises an outer portion which is located radially outward of the stator assembly (outer rotor configuration). The wind turbine generator further comprises a brake system with a component which has the shape of a ring. The component comprises means, preferably a plurality of holes, for connecting the component to a flange of the stator assembly. The component further comprises a number of, preferably at least three, radially outwardly protruding portions (wings). The radially outwardly protruding portions comprise means, preferably a plurality of holes, for connecting the radially outwardly protruding portions to frictional members operatively configured for frictionally engaging at least a portion of a brake disc and/or for connecting the radially outwardly protruding portions to a rotor lock system.

Preferably the outwardly protruding portions (wings) are made in one piece with the component. In other words, the outwardly protruding portions and the component are no separate components connected with each other. Advantageously, the outwardly protruding portions are equally spaced in circumferential direction of the component.

Furthermore, the component and/or a brake disc, for example a corresponding ring-shaped brake disc, can be prefabricated away from the generator production line and applicable for different generator types. Then a crane can take the component or the complete brake system and it can be mounted onto the generator line by only adding bolts and/or pins and/or shims to align stator with rotor in the braking system.

The frictional members operatively configured for frictionally engaging at least a portion of a brake disc may be brake callipers.

Using the described component in the brake system of the inventive wind turbine generator has the advantage, that the structural strength of the brake system is increased and the forces acting on frictional members, for instance the brake callipers, and the forces acting on the rotor lock system can be divided over a larger area. Moreover, a fixed shaft in the generator may have a flange casted on, for example instead of pads. The component can be mounted on this flange. Brake callipers and/or a rotor lock can easier be mounted onto the outwardly protruding portions than in previously known solutions.

Preferably the brake disc has the shape of a ring. Advantageously, the brake system comprises a rotor lock system.

Moreover, the brake disc can have the shape of a ring and can comprise means, preferably a plurality of holes, for connecting it to the rotor assembly, preferably by means of a flange. Furthermore, pins may be placed in an interface between a fixed shaft flange and the component and may insure placement accuracy and additional strength in the assembly.

Preferably the brake disc comprises a number of holes or recesses and the brake system comprises a number of rotorlock pins configured for engaging into the holes or recesses. Advantageously the holes or recesses are equally spaced in circumferential direction of the component or the ring portion of the component.

The brake system of the inventive wind turbine generator can comprise a number of rotorlock pins and at least one plate, for instance a static plate, configured for supporting the rotorlock pins. For example a plate can be placed on each side of the brake disc. The rotorlock pins can be engaged through a hole in the brake disc and supported by a plate on each side of the brake disc. This reduces bending of the rotorlock pins. For example one plate can be located on one side of the brake disc and a second plate can be located on the other side of the brake disc.

Preferably, the stator assembly comprises a flange and the inventive component is connected to the flange. The generator may be a direct drive generator. The generator has advantageously a nominal power or effective power of at least 1MW, for instance at least 3MW.

Moreover, the brake disc may extend radially inward from the outer portion of the rotor assembly to the rotation axis. The rotor assembly may comprise a flange and/or threads in the rotor material. The brake disc may be fastened directly into the rotor assembly or to the flange. Furthermore, the at least one frictional member, for instance brake calliper, can extend radially outward regarding the rotation axis.

The inventive wind turbine comprises a generator as previously described. The wind turbine is preferably a horizontal axis wind turbine. The wind turbine may comprise a generator and/or a hub. The brake system may be connected to the generator and/or to the hub. The inventive wind turbine has the same advantages as the inventive brake system and the inventive generator.

The inventive method for assembling a wind turbine generator relates to a generator comprising a stator assembly, a rotor assembly and a rotation axis, wherein the rotor assembly comprises an outer portion which is located radially outward of the stator assembly. The method comprises the step of connecting a component as described above to the stator assembly, preferably by means of a flange. For this purpose, the stator assembly and/or the component may comprise a flange. In addition it comprises connecting a brake disc to the rotor assembly.

The inventive method is in principle applicable for manufacturing a generator or repairing or rebuilding or converting an existing generator.

The method may further comprise the step of aligning the component connected to the stator assembly with a brake disc. The brake disc may be connected to the rotor assembly by means of a flange. Generally, the outer portion of the rotor assembly may comprise the brake disc.

The method may further comprise the step of placing pins in an interface between a fixed shaft flange and the component. This may insure placement accuracy and additional strength in the assembly.

Furthermore, the component and/or a brake disc, for example a corresponding ring-shaped brake disc, can be prefabricated away from the generator production line and applicable for different generator types. Then a crane can take the component or the complete brake system and it can be mounted onto the generator line only adding bolts and/or pins and/or shims to align stator with rotor in the braking system.

The invention is advantageous in that the entire brake system and/or rotorlock system can be completely pre-assembled away from the line. It has only to be figured out which thickness shims are needed to be added during the assembly state of the brake and/or rotorlock system on the rest of the generator. Mounting a component or console ring for brakes and rotorlock on a flange of a fixed shaft is an uncomplicated procedure and with the use of pins it helps easy aligning and centering placement of the rotorlock and brake caliper.

As the lock system may require a plurality of locks, for instance three locks, to be engaged simultaneously, making one piece component or console ring in one machining negates almost entirely the inter alignment between the locks, for instance three locks. One inventive component or console ring can also avoid unexpected wear from calliper pads, as they are placed in the same machined plane. Thereby the system is more cost efficient and more serviceable than previous systems.

### Description of embodiments

Further features, properties and advantages of the present invention will become clear from the following description of embodiments in conjunction with the accompanying drawings. The embodiments do not limit the scope of the present invention which is determined by the appended claims. All described features are advantageous as separate features or in any combination with each other. Corresponding elements are designated with the same reference numerals.
- Figure 1: schematically shows a wind turbine.
- Figure 2: schematically shows part of a generator with an outer rotor configuration in a sectional view.
- Figure 3: schematically shows a front view of a known brake system.
- Figure 4: schematically shows a perspective view of an inventive brake system.
- Figure 5: schematically shows a sectional view of part of an inventive generator.

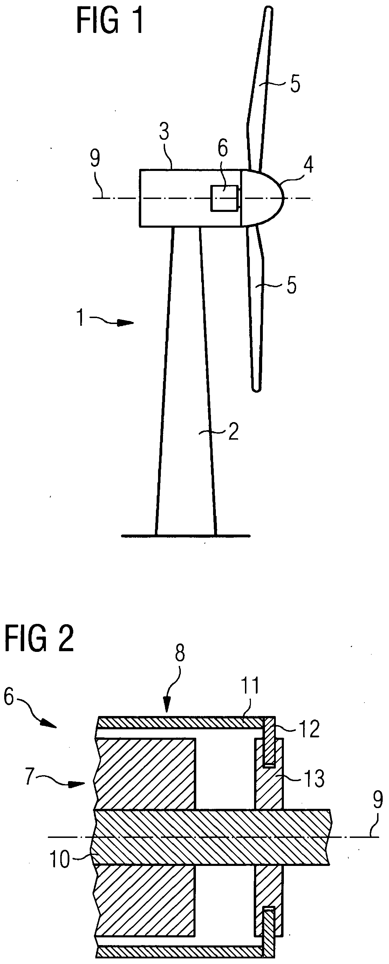

An embodiment of the present invention will now be described with reference to Figures 1 to 5.

Figure 1 schematically shows a wind turbine 1. The wind turbine 1 comprises a tower 2, a nacelle 3 and a hub 4. The nacelle 3 is located on top of the tower 2. The hub 4 comprises a number of wind turbine blades 5. The hub 4 is mounted to the nacelle 3. Moreover, the hub 4 is pivot-mounted such that it is able to rotate about a rotation axis 9, for example a horizontal rotation axis 9. A generator 6 is located inside the nacelle 3. The wind turbine 1 is a direct drive wind turbine.

Figure 2 schematically shows part of a generator 6 with an outer rotor configuration in a sectional view. The generator 6 comprises a stator assembly 7 and a rotor assembly 8. The stator assembly 7 comprises a stationary shaft 10 which is located close to the rotation axis 9. The rotor assembly 8 comprises an outer rotor portion 11 which is located radially outward of the stator assembly 7. The rotor assembly 8 further comprises a brake disc 12. The brake disc 12 may be part of the outer rotor portion 11 or it may be connected to the outer rotor portion 11, for example by means of a flange. The brake disc 12 extends radially inward from the outer portion 11 to the rotation axis 9. The outer portion 11 of the rotor assembly 8 and the brake disc 12 are pivot-mounted about the rotation axis 9.

The stator assembly 7 further comprises a frictional member, in the present embodiment a brake calliper system 13. The brake calliper system 13 is operatively configured for frictionally engaging at least a portion of the brake disc 12. The brake calliper system 13 extends radially outward from the stationary shaft 10 to the brake disc 12. The brake calliper system 13 comprises at least one brake calliper on each side of the brake disc 12 in order to enclose the brake disc 12.

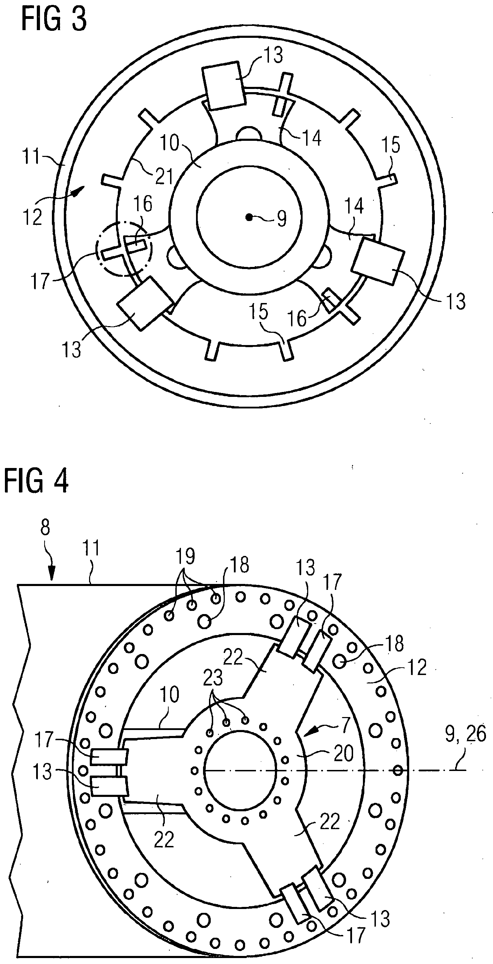

Figure 3 schematically shows a front view of a known brake system of the generator 6. The brake disc 12 comprises an inner surface 21. The inner surface 21 of the brake disc 12 comprises a number of recesses 15. The brake system further comprises a number of central mounted consoles or flanges 14, in the present embodiment three central mounted consoles or flanges 14. The consoles or flanges 14 are individually mounted to the stationary shaft 10. The consoles or flanges 14 are staggered about an angle of 120° regarding the circumference of the stationary shaft 10. Alternatively any other number of the consoles or flanges 14 is possible. Preferably the consoles or flanges 14 are arranged around the circumference of the stationary shaft 10 such that adjacent flanges have an equal distance to each other.

The brake system comprises at least one rotor lock system 17. The rotor lock system 17 comprises at least one piston 16. The piston is located inside the console or flange 14 or is located inside of a lock casing. The lock casing can be connected to the console or flange 14. Alternatively, the brake system can comprise separate consoles or flanges for housing the pistons or for being connected with at least one lock casing of the rotor lock system 17 and separate consoles or flanges 14 being connected with the brake system, especially the brake calliper system 13. The pistons 16 are located such that they are prepared to engage with the recesses 15 in the inner surface 21 of the brake disc 12.

Figure 4 schematically shows a perspective view of an inventive brake system. The brake system comprises an inventive component 20, which has the shape of a ring. The component 20 comprises means, for example a plurality of holes 23, for connecting it to a flange of the stator assembly 7, for example by means of bolts, pins or shims. The component can for instance be connected to a flange of the stationary shaft 10.

The component 20 further comprises a central axis 26 and at least three radially outwardly protruding portions (wings) 22. The component 20 and the radially outwardly protruding portions 22 are made in one piece.

The radially outwardly protruding portions 22 may comprise means (not shown in figure 4), for example a plurality of holes, for connecting the radially outwardly protruding portions 22 to frictional members 13 operatively configured for frictionally engaging at least a portion of the brake disc 12 and/or for connecting the radially outwardly protruding portions to a rotor lock system 17.

The protruding portions (wings) 22 are staggered about an angle of 120° regarding the circumference of the component 20. Alternatively any other number or angle of the protruding portions 22 is possible. Preferably the protruding portions 22 are arranged around the circumference of the component 20 such that adjacent protruding portions 22 have an equal distance to each other.

The inventive brake system further comprises a brake disc 12. The brake disc 12 may have the shape of a ring. The brake disc 12 comprises a plurality of holes 19 for connecting it to the rotor assembly 8 by means of a flange or threaded holes. The brake disc 12 may further comprise a number of holes 18 or other means for rotorlock pins configured for engaging into the holes.

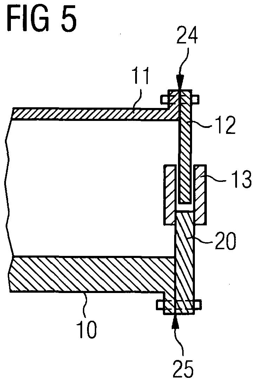

Figure 5 schematically shows a sectional view of part of an inventive generator 6. The brake disc 12 is connected to the outer portion 11 of the rotor assembly 8 by means of a flange 24. The stator assembly 7, for example the central shaft 10, comprises a flange 25. The component 20 is connected to the stator assembly 7 by means of the flange 25.

In the context of the inventive method for assembling a wind turbine generator the component 20 is connected to the stator assembly 7, preferably to the stationary shaft 10 by means of the flange 25. The inventive method is applicable for manufacturing a generator or repairing or rebuilding or converting an existing generator.

After connecting the component 20 to the stator assembly 7, the component 20 can be aligned with a brake disc 12. The brake disc 12 may be connected to the rotor assembly 8 by means of the flange 24 or by means of threaded holes/pins in the rotor assembly. Generally, the outer portion 11 of the rotor assembly 8 may comprise the brake disc 12.

The method may further comprise the step of placing pins in an interface between a fixed shaft flange 25 as well as for the rotor assembly 11 and the component 20 (not shown in figure 5). This may insure placement accuracy and additional strength in the assembly.

Furthermore, the component 20 and/or a brake disc 12, for example a corresponding ring-shaped brake disc, can be prefabricated away from the generator production line and applicable for different generator types. Then a crane can take the component or the complete brake system and it can be mounted onto the generator line only adding bolts and/or pins and/or shims to align stator with rotor in the braking system.

## Claims

1. A wind turbine generator (6) comprising a stator assembly (7), a rotor assembly (8), a rotation axis (9), and a brake system, wherein the rotor assembly (8) comprises an outer portion (11) which is located radially outward of the stator assembly (7) and wherein the brake system comprises a break disc (12) which is connected to the rotor assembly (8) and frictional members (13) operatively configured for frictionally engaging at least a portion of a brake disc (12) and/or for connecting radially outwardly protruding portions to a rotor lock system (17),
**characterised in that**
- the brake system comprises a component (20) which has the shape of a ring,
- the stator assembly (7) comprises a flange and the component (20) is connected to the flange of the stator assembly (7), and
- the component (20) comprises a number of radially outwardly protruding portions (22) to which the frictional members (13) are connected.

2. The wind turbine generator (6) as claimed in claim 1, **characterised in that**
the brake system comprises a rotor lock system (17).

3. The wind turbine generator (6) as claimed in claim 1 or claim 2,
**characterised in that**
the brake disc (12) has the shape of a ring.

4. The wind turbine generator (6) as claimed in any of the claims 1 to claim 3,
**characterised in that**
the brake disc (12) comprises a number of holes (18) or recesses and the brake system comprises a number of rotorlock pins configured for engaging into the holes (18) or recesses.

5. The wind turbine generator (6) as claimed in any of the claims 2 to claim 4,
**characterised in that**
the brake system comprises a number of rotorlock pins and a static plate configured for supporting the rotorlock pins.

6. The wind turbine generator (6) as claimed in any of the claims 1 to 5,
**characterised in that**
the generator (6) is a direct drive generator and/or the generator has a nominal power of at least 1MW.

7. The wind turbine generator (6) as claimed in any of the claims 1 to 6,
**characterised in that**
the brake disc (12) extends radially inward from the outer portion (11) of the rotor assembly (8) to the rotation axis (9).

8. The wind turbine generator (6) as claimed in any of the claims 1 to 7,
**characterised in that**
the rotor assembly (8) comprises a flange (24) and the brake disc (12) is fastened to the flange (24) of the rotor assembly (8).

9. The wind turbine generator (6) as claimed in any of the claims 1 to 8,
**characterised in that**
the at least one frictional member (13) extends radially outward regarding the rotation axis (9).

10. The wind turbine generator (6) as claimed in any of the claims 1 to 9,
**characterised in that**
the outwardly protruding portions (22) are made in one piece with the component (20).

11. A wind turbine (1) comprising a generator (6) as claimed in any of the claims 1 to 10.

12. A method for assembling a wind turbine generator (6) comprising a stator assembly (7), a rotor assembly (8) and a rotation axis (9), wherein the rotor assembly (8) comprises an outer portion (11) which is located radially outward of the stator assembly (7), where a brake disc (12) is connected to the outer portion (11) the rotor assembly (8),
**characterised in**
connecting a component (20) to the stator assembly (7) by means of a flange of the stator assembly (7), which component (20) has the shape of a ring and comprises a number of radially outwardly protruding portions (22).

13. The method as claimed in claim 12,
**characterised in**
aligning the component (20) connected to the stator assembly (7) with a brake disc (12).

14. The method as claimed in claim 12 or claim 13, **characterised in**
connecting a brake disc (12) to the rotor assembly (8) by means of a flange (24).

## Patentansprüche

1. Windturbinengenerator (6) mit einer Statorbaugruppe (7), einer Rotorbaugruppe (8), einer Rotationsachse (9) und einem Bremssystem, wobei die Rotorbaugruppe (8) einen Außenabschnitt (11) umfasst, der sich radial außerhalb der Statorbaugruppe (7) befindet, und wobei das Bremssystem eine Bremsscheibe (12) umfasst, die mit der Rotorbaugruppe (8) verbunden ist, und Reibelemente (13), die so wirkkonfiguriert sind, dass sie zumindest mit einem Abschnitt einer Bremsscheibe (12) in Reibschluss gebracht werden und/ oder radial nach außen vorstehende Abschnitte mit einem Rotorverriegelungssystem (17) verbinden,
**dadurch gekennzeichnet, dass**
- das Bremssystem eine Komponente (20) umfasst, die die Form eines Rings aufweist,
- die Statorbaugruppe (7) einen Flansch umfasst und die Komponente (20) mit dem Flansch der Statorbaugruppe (7) verbunden ist und
- die Komponente (20) eine Anzahl radial nach außen vorstehende Abschnitte (22) umfasst, mit denen die Reibelemente (13) verbunden sind.

2. Windturbinengenerator (6) nach Anspruch 1,
**dadurch gekennzeichnet, dass**
das Bremssystem ein Rotorverriegelungssystem (17) umfasst.

3. Windturbinengenerator (6) nach Anspruch 1 oder 2,
**dadurch gekennzeichnet, dass**
die Bremsscheibe (12) die Form eines Rings aufweist.

4. Windturbinengenerator (6) nach einem der Ansprüche 1 bis 3,
**dadurch gekennzeichnet, dass**
die Bremsscheibe (12) eine Anzahl Löcher (18) oder Vertiefungen und das Bremssystem eine Anzahl Rotorverriegelungsstifte umfasst, die zum Eingreifen in die Löcher (18) oder Vertiefungen konfiguriert sind.

5. Windturbinengenerator (6) nach einem der Ansprüche 2 bis 4,
**dadurch gekennzeichnet, dass**
das Bremssystem eine Anzahl Rotorverriegelungsstifte und eine feststehende Platte umfasst, die so konfiguriert ist, dass sie die Rotorverriegelungsstifte hält.

6. Windturbinengenerator (6) nach einem der Ansprüche 1 bis 5,
**dadurch gekennzeichnet, dass**
es sich bei dem Generator (6) um einen direkt angetriebenen Generator handelt und/ oder der Generator eine Nennleistung von mindestens 1 MW hat.

7. Windturbinengenerator (6) nach einem der Ansprüche 1 bis 6,
**dadurch gekennzeichnet, dass**
die Bremsscheibe (12) von dem Außenabschnitt (11) der Rotorbaugruppe (8) radial nach innen zur Rotationsachse (9) verläuft.

8. Windturbinengenerator (6) nach einem der Ansprüche 1 bis 7,
**dadurch gekennzeichnet, dass**
die Rotorbaugruppe (8) einen Flansch (24) umfasst und die Bremsscheibe (12) an dem Flansch (24) der Rotorbaugruppe (8) befestigt ist.

9. Windturbinengenerator (6) nach einem der Ansprüche 1 bis 8,
**dadurch gekennzeichnet, dass**
das mindestens eine Reibelement (13) in Bezug auf die Rotationsachse (9) radial nach außen verläuft.

10. Windturbinengenerator (6) nach einem der Ansprüche 1 bis 9,
**dadurch gekennzeichnet, dass**
die nach außen vorstehenden Abschnitte (22) einstückig mit der Komponente (20) hergestellt sind.

11. Windturbine (1) mit einem Generator (6) nach einem der Ansprüche 1 bis 10.

12. Verfahren zum Zusammenbauen eines Windturbinengenerators (6) mit einer Statorbaugruppe (7), einer Rotorbaugruppe (8) und einer Rotationsachse (9), wobei die Rotorbaugruppe (8) einen Außenabschnitt (11) umfasst, der sich radial außerhalb der Statorbaugruppe (7) befindet, wobei eine Bremsscheibe (12) mit dem Außenabschnitt (11) der Rotorbaugruppe (8) verbunden ist,
**gekennzeichnet durch**
das Verbinden einer Komponente (20) mit der Statorbaugruppe (7) mit Hilfe eines Flansches der Statorbaugruppe (7), wobei die Komponente (20) die Form eines Rings aufweist und eine Anzahl radial nach außen vorstehender Abschnitte (22) umfasst.

13. Verfahren nach Anspruch 12,
**gekennzeichnet durch**
das Ausrichten der mit der Statorbaugruppe (7) verbundenen Komponente (20) an einer Bremsscheibe (12).

14. Verfahren nach Anspruch 12 oder 13,
**gekennzeichnet durch**
das Verbinden einer Bremsscheibe (12) mit der Rotorbaugruppe (8) mit Hilfe eines Flansches (24).

## Revendications

1. Un générateur de turbine éolienne (6) comprenant un ensemble stator (7), un ensemble rotor (8), un axe de rotation (9) et un système de frein, l'ensemble rotor (8) comprenant une partie extérieure (11) qui est située radialement vers l'extérieur de l'ensemble stator (7), et le système de frein comprenant un disque de frein (12) qui est raccordé à l'ensemble rotor (8) et à des éléments de frottement (13) configurés de manière opérationnelle de façon à entrer en prise par frottement avec au moins une partie d'un disque de frein (12) et/ou de façon à raccorder radialement vers l'extérieur des parties en saillie à un système de verrouillage de rotor (17),
**caractérisé en ce que**
- le système de frein comprend un composant (20) qui possède la forme d'une bague,
- l'ensemble stator (7) comprend une bride et le composant (20) est raccordé à la bride de l'ensemble stator (7), et
- le composant (20) comprend un nombre de parties en saillie radialement tournées vers l'extérieur (22) auxquelles les éléments de frottement (13) sont raccordés.

2. Le générateur de turbine éolienne (6) selon la revendication 1,
**caractérisé en ce que**
le système de frein comprend un système de verrouillage de rotor (17).

3. Le générateur de turbine éolienne (6) selon la revendication 1 ou 2,
**caractérisé en ce que**
le disque de frein (12) est de la forme d'une bague.

4. Le générateur de turbine éolienne (6) selon l'une quelconque des revendications 1 à 3,
**caractérisé en ce que**
le disque de frein (12) comprend un nombre de trous (18) ou d'évidements et le système de frein comprend un nombre de goupilles de verrouillage de rotor configurées de façon à s'insérer dans les trous (18) ou les évidements.

5. Le générateur de turbine éolienne (6) selon l'une quelconque des revendications 2 à 4,
**caractérisé en ce que**
le système de frein comprend un nombre de goupilles de verrouillage de rotor et une plaque statique configurée de façon à soutenir les goupilles de verrouillage de rotor.

6. Le générateur de turbine éolienne (6) selon l'une quelconque des revendications 1 à 5,
**caractérisé en ce que**
le générateur (6) est un générateur à entraînement direct et/ou le générateur possède une puissance nominale d'au moins 1 MW.

7. Le générateur de turbine éolienne (6) selon l'une quelconque des revendications 1 à 6,
**caractérisé en ce que**
le disque de frein (12) s'étend radialement vers l'intérieur à partir de la partie extérieure (11) de l'ensemble rotor (8) vers l'axe de rotation.

8. Le générateur de turbine éolienne (6) selon l'une quelconque des revendications 1 à 7,
**caractérisé en ce que**
l'ensemble rotor (8) comprend une bride (24) et le disque de frein (12) est fixé à la bride (24) de l'ensemble rotor (8)

9. Le générateur de turbine éolienne (6) selon l'une quelconque des revendications 1 à 8,
**caractérisé en ce que**
le au moins un élément de frottement (13) s'étend radialement vers l'extérieur par rapport à l'axe de rotation (9).

10. Le générateur de turbine éolienne (6) selon l'une quelconque des revendications 1 à 9,
**caractérisé en ce que**
les parties en saillie vers l'extérieur (22) sont fabriquées d'un seul tenant avec le composant (20).

11. Une turbine éolienne (1) comprenant un générateur (6) selon l'une quelconque des revendications 1 à 10.

12. Un procédé d'assemblage d'un générateur de turbine éolienne (6) comprenant un ensemble stator (7), un ensemble rotor (8) et un axe de rotation (9), l'ensemble rotor (8) comprenant une partie extérieure (11) qui est située radialement vers l'extérieur de l'ensemble stator (7), un disque de frein (12) qui est raccordé à la partie extérieure (11) de l'ensemble rotor (8)
**caractérisé par**
le raccordement d'un composant (20) à l'ensemble stator (7) au moyen d'une bride de l'ensemble stator (7), ledit composant (20) possédant la forme d'une bague et comprenant un nombre de parties en saillie radialement tournées vers l'extérieur (22).

13. Le procédé selon la revendication 12,
**caractérisé par**
l'alignement du composant (20) raccordé à l'ensemble stator (7) avec un disque de frein (12).

14. Le procédé selon la revendication 12 ou 13,
**caractérisé par**
le raccordement d'un disque de frein (12) à l'ensemble rotor (8) au moyen d'une bride (24).
